(19) Europäisches Patentamt
European Patent Office
Office européen des brevets

(11) **EP 3 266 929 A1**

(12) **EUROPEAN PATENT APPLICATION**
published in accordance with Art. 153(4) EPC

(43) Date of publication:
**10.01.2018 Bulletin 2018/02**

(51) Int Cl.:
***D06M 15/263*** *(2006.01)*

(21) Application number: **15883957.1**

(86) International application number:
**PCT/JP2015/056454**

(22) Date of filing: **05.03.2015**

(87) International publication number:
**WO 2016/139790 (09.09.2016 Gazette 2016/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Tohoku University**
**Sendai-shi, Miyagi 980-8577 (JP)**

(72) Inventor: **ARITA Toshihiko**
**Sendai-shi**
**Miyagi 980-8577 (JP)**

(74) Representative: **Hoffmann Eitle**
**Patent- und Rechtsanwälte PartmbB**
**Arabellastraße 30**
**81925 München (DE)**

(54) **SURFACE-MODIFIED BIOFIBER, METHOD FOR PRODUCING SAME, AND DISPERSION LIQUID AND RESIN COMPOSITION CONTAINING SURFACE-MODIFIED BIOFIBER**

(57)     A method for producing surface-modified biofibers comprises:

a first polymerization step of obtaining a hydrophilic block (A) made of a first polymer and arranged on surfaces of biofibers by conducting a living radical polymerization of a first monomer in a reaction solution containing the biofibers, the first monomer, and a solvent, and allowing the first polymer thus obtained to be attached to the surfaces of the biofibers; and

a second polymerization step of obtaining a hydrophobic block (B) made of a second polymer and stacked on an outside of the hydrophilic block (A) by adding a second monomer to the reaction solution after the first polymerization step, conducting a living radical polymerization of the second monomer, and polymerizing the second polymer thus obtained onto growing ends of the first polymer, wherein

the biofibers, the first polymer, the second polymer, and the solvent have surface free energies satisfying a condition expressed by the following formula (1):

$$E_{BF} > E_A > E_B > E_S \quad \cdots (1)$$

[in the formula (1), $E_{BF}$ represents the surface free energy of the biofibers, $E_A$ represents the surface free energy of the first polymer, $E_B$ represents the surface free energy of the second polymer, and $E_S$ represents the surface free energy of the solvent].

**EP 3 266 929 A1**

**(Cont. next page)**

Fig.1

**Description**

[Technical Field]

The present invention relates to surface-modified biofiber, method for producing the surface-modified biofiber, liquid dispersion and resin composition comprising the surface-modified biofiber.

[Background Art]

Biofibers such as cellulose fibers are mainly used as fillers for resin materials. However, biofibers made of polysaccharides have a problem of having a tendency to easily aggregate, and a problem of having a low dispersibility in organic solvents and hydrophobic resins due to their hydrophilicity. For these reasons, a method for modifying the surfaces of biofibers has been conventionally proposed to enhance the dispersibility of the biofibers.

For example, Japanese Unexamined Patent Application Publication No. 2011-184816 (PLT1) discloses that hydroxy groups in cellulose nanofibers are chemically modified by etherification, esterification, or silylation, and thereby the number of hydroxyl groups is reduced to enhance the dispersibility in polymeric materials. However, just adjusting the number of hydroxyl groups as described above still leaves a problem that it is difficult to sufficiently control the dispersibility of the cellulose nanofibers in the polymeric material, and a problem that only limited types of polymeric materials can be combined with the cellulose nanofibers.

Also, International Publication No. WO2013/077354 (PLT 2) describes a dispersion of cellulose nanofibers in which an amine having a linear or branched molecule is bonded to a cellulose molecule, and teaches that the cellulose nanofibers can be further compounded with another material such as a synthetic polymer. However, since the method described in PLT 2 involves: first, conducting an acid treatment on the cellulose molecules to introduce carboxylic acid type groups; and then bonding the groups thud introduced to the amino groups of the above amine separately prepared, the method has problems of the multi-stage production process and the difficulty of mass-production. Also, since there is a need to use a specific amine, the method also has a problem that it is difficult to sufficiently control the dispersibility of the cellulose nanofibers and a problem that only limited types of synthetic polymers can be combined with the cellulose nanofibers.

Furthermore, Japanese Unexamined Patent Application Publication No. 2010-265357 (PLT 3) describes a method for producing a resin material containing a thermoplastic resin and surface-treated cellulose fibers, and proposes, as a method for treating the surfaces of the cellulose fibers, a method for introducing a reactive group by using a silane coupling agent, or a method using an amphiphilic polymer, in addition to the aforementioned chemical modification such as an acid treatment. In the above method using a silane coupling agent, however, the surfaces of the cellulose fibers are covered with the coupling agent containing Si, which causes problems that: the cellulose fibers cannot sufficiently exhibit the intrinsic physical properties and functions, and the resultant cellulose fibers cause a decrease in the filling rate when used as fillers, and demonstrate an insufficient dispersibility in a solvent. Meanwhile, the above method using an amphiphilic polymer requires a specific amphiphilic polymer to be prepared separately, which causes problems of the multi-stage production process and the difficulty of mass-production. In addition, even though a resin material is obtained by simply mixing together the amphiphilic polymer and the cellulose fibers thus prepared separately, and further mixing the resultant mixture with a resin, the resin material thus obtained has a problem that a dispersibility of the cellulose fibers and a stability of the material are both insufficient.

[Citation List]

[Patent Literature]

[PLT 1] Japanese Unexamined Patent Application Publication No. 2011-184816
[PLT 2] International Publication No. WO2013/077354
[PLT 3] Japanese Unexamined Patent Application Publication No. 2010-265357

[Summary of Invention]

[Technical Problem]

The present invention has been made in view of the above-described problems of the conventional technologies, and an object of the present invention is to provide surface-modified biofibers having an excellent dispersibility in a solvent, a dispersion comprising the surface-modified biofibers, a resin composition comprising the surface-modified biofibers, and a method for producing surface-modif ied biof ibers which enables the surface-modified biofibers to be obtained easily without conducting a treatment for introducing a polymerizable reactive group or a reactive group for bonding with an organic polymer onto the surfaces of biofibers.

[Solution to Problem]

The present inventors have conducted intensive study to achieve the above-described object, and consequently have found the following fact. Specifically, first, a first monomer is polymerized in a reaction solution containing biofibers, the first monomer, and a solvent which satisfy a specific condition. Thus, even without conducting a treatment for introducing a polymerizable reactive group or a reactive group for bonding with an organic polymer onto the surfaces of the biofibers, the specific first polymer thus obtained can be attached (preferably adsorbed) and arranged onto the surfaces of the biofibers, so that a hydrophilic block made of the first polymer can be obtained on the surfaces of the biofibers. Subsequently, the present inventors also have found the following fact. Specifically, a second monomer satisfying a specific condition is added to the reaction solution, and polymerized. Thus, the specific second polymer thus obtained can be stacked on an outside of the hydrophilic block, so that a hydrophobic block made of the second polymer can be obtained on the surface of the hydrophilic block. Thus, the present inventors have found that such surface-modified biofibers, in which the surfaces of the biofibers are coated with the hydrophilic block and the hydrophobic block, have a high stability and an excellent dispersibility in a solvent.

Moreover, the present inventors have found that this method is applicable to a wide range of biofibers, and this method enables the surface-modified biofibers to be easily obtained in which a polymer comprising the first polymer and the second polymer is arranged at a high content ratio on the surfaces of the biofibers and no modifier such as a silane coupling agent is contained. These findings have led to the completion of the present invention.

Specifically, a method for producing surface-modified biofibers of the present invention is a method comprising:

a first polymerization step of obtaining a hydrophilic block (A) made of a first polymer and arranged on surfaces of biofibers by conducting a living radical polymerization of a first monomer in a reaction solution containing the biofibers, the first monomer, and a solvent, and allowing the first polymer thus obtained to be attached to the surfaces of the biofibers; and

a second polymerization step of obtaining a hydrophobic block (B) made of a second polymer and stacked on an outside of the hydrophilic block (A) by adding a second monomer to the reaction solution after the first polymerization step, conducting a living radical polymerization of the second monomer, and polymerizing the second polymer thus obtained onto growing ends of the first polymer, wherein

the biofibers, the first polymer, the second polymer, and the solvent have surface free energies satisfying a condition expressed by the following formula (1):

$$E_{BF} > E_A > E_B > E_S \cdots \qquad (1)$$

[in the formula (1), $E_{BF}$ represents the surface free energy of the biofibers, $E_A$ represents the surface free energy of the first polymer, $E_B$ represents the surface free energy of the second polymer, and $E_S$ represents the surface free energy of the solvent].

Moreover, in the method for producing surface-modified biofibers of the present invention, the biofibers preferably have an average diameter of 0.3 to 10,000 nm, and an aspect ratio of 10,000 or less, and the biofibers are preferably made of cellulose.

In addition, preferably, the method for producing surface-modified biofibers of the present invention does not include a step for introducing a reactive group on the surfaces of the biofibers.

Surface-modified biofibers of the present invention are surface-modified biofibers obtained by the method for producing surface-modified biofibers of the present invention, the surface-modified biofibers comprising:

the biofibers;
the hydrophilic block (A) made of the first polymer and arranged on the surfaces of the biofibers; and
the hydrophobic block (B) made of the second polymer and stacked on the outside of the hydrophilic block (A), wherein
the biofibers, the first polymer, and the second polymer have surface free energies satisfying a condition expressed by the following formula (2):

$$E_{BF} > E_A > E_B \cdots \qquad (2)$$

[in the formula (2), $E_{BF}$ represents the surface free energy of the biofibers, $E_A$ represents the surface free energy of the first polymer, and $E_B$ represents the surface free energy of the second polymer].

Moreover, in the surface-modified biofibers of the present invention, a total content of the first polymer and the second polymer per unit surface area of the biof ibers is preferably 0.0005 to 1.0 chains/nm$^2$, and a mass ratio between the first polymer and the second polymer (a mass of the first polymer:a mass of the second polymer) is preferably 1:1 to 1:500.

Further, in the surface-modified biofibers of the present invention, a polymer comprising the first polymer and the second polymer preferably has a number average molecular weight of 3,000 to 1,000,000 g/mol, and a molecular weight distribution (weight average molecular weight/number average molecular weight) of 1.05 to 2.0. In addition, the surface-modified biofibers of the present invention preferably have an average diameter of 0.9 to 10,000 nm, and an aspect ratio of 10,000 or less.

A liquid dispersion of the present invention comprises the surface-modified biofibers of the present invention and a solvent. In addition, a resin composition of the present invention comprises the surface-modified biofibers of the present invention and a resin.

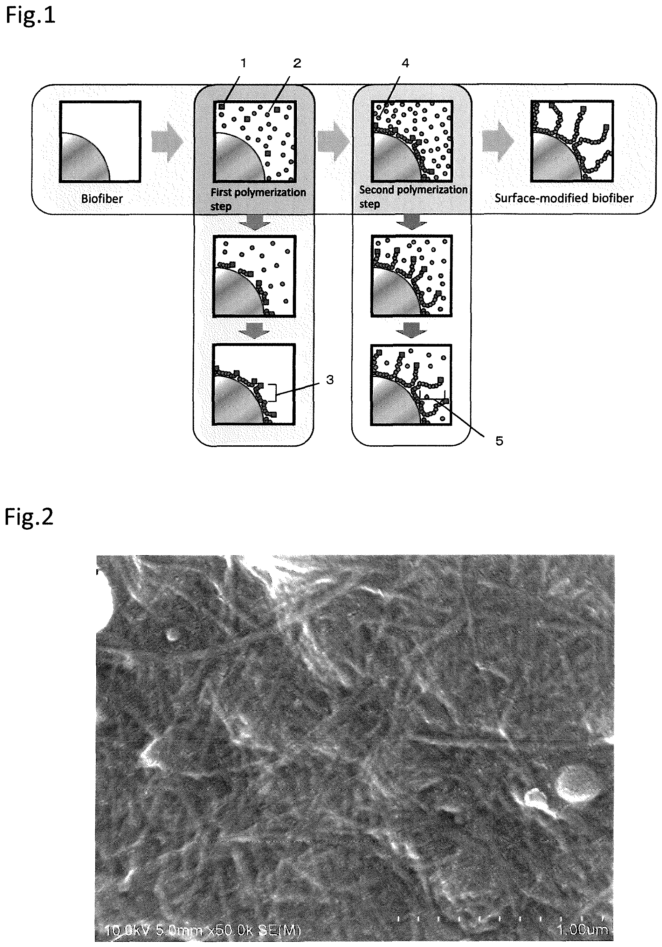

Note that although it is not exactly clear why the present invention achieves the above-described obj ect, the present inventors speculate as follows. Specifically, in the present invention, as shown in a flowchart of Fig. 1, first, a first monomer (2) from which a relatively hydrophilic first polymer (3) having a high surface free energy can be obtained is polymerized in a solvent which is a good solvent for the first monomer (2) and the second monomer (4) but has a lower surface free energy than the first polymer (3) and the second polymer (5) in the presence of biofibers having a higher surface free energy than the first polymer (3). Thus, as the polymerization proceeds, the obtained first polymer (3) is accumulated while covering the surfaces of the biofibers, and preferably is adsorbed onto the surfaces of the biofibers to form a hydrophilic block (A). Subsequently, the second monomer (4) is added to the solvent and polymerized, and also the obtained second polymer (5) is polymerized onto growing ends of the first polymer (3). Thus, the second polymer 5 is stacked on an outside of the hydrophilic block (A) to form a hydrophobic block (B).

In addition, here, the surface free energies of the biofibers, the obtained first and second polymers, and the solvent are adjusted to satisfy a specific condition. Hence, the hydrophilic block (A) is prevented from being exposed on the topmost surface, and an organic polymer layer having a stable two-layer structure can be formed in which the surface of the hydrophilic block (A) is covered with the hydrophobic block (B). The present inventors speculate that, for this reason, a composite (surface-modified biofibers) in which the organic polymer is stably arranged at a high content ratio on the surfaces of the biofibers can be obtained, and an excellent dispersibility in a solvent can be exhibited.

Moreover, in the present invention, it is unnecessary to introduce a polymerizable reactive group containing Si or the like onto the surfaces of the biofibers. The present inventors speculate that, for this reason, the biofibers can sufficiently exhibit their intrinsic physical properties and functions. Moreover, it is also unnecessary to introduce a specific reactive group for bonding with the polymer onto the surfaces of the biofibers, so that the surface-modified biofibers can be obtained easily. The present inventors speculate that since the method of the present invention utilizes only the difference in surface free energy (surface tension) among the biofibers, the monomers, the polymers, and the solvent as described above, a composite (surface-modified biofibers) in which the surfaces of the biofibers are modified by the organic polymer can be obtained easily at low costs in a large amount, without imposing any limitation on the type of the biofibers. Furthermore, in the present invention, the monomers are polymerized by living radical polymerizations to synthesize the polymer and stack the polymer on the surfaces of the biofibers. The present inventors speculate that, for this reason, a composite in which the organic polymer is stably attached to the surfaces of the biofibers can be obtained.

[Advantageous Effects of Invention]

According to the present invention, it is possible to provide surface-modified biofibers having an excellent dispersibilityina solvent, a liquid dispersion comprising the surface-modified biofibers, a resin composition comprising the surface-modified biofibers, and a method for producing surface -modified biofibers which enables the surface-modified biofibers to be obtained easily without conducting a treatment for introducing a polymerizable reactive group or a reactive group for bonding with an organic polymer onto the surfaces of the biofibers.

[Brief Description of Drawings]

[Fig. 1] Fig. 1 is a flowchart showing a method for producing surface-modified biofibers of the present invention.
[Fig. 2] Fig. 2 is a scanning electron micrograph of a composite obtained in Example 1.
[Fig. 3] Fig. 3 is a scanning electron micrograph of unmodified biofibers obtained in Comparative Example 1.

[Fig. 4] Fig. 4 is a scanning electron micrograph of a composite obtained in Example 3.
[Fig. 5] Fig. 5 is a scanning electron micrograph of unmodified biofibers obtained in Comparative Example 2.
[Fig. 6] Fig. 6 is a graph showing results of FTIR measurements of the composites obtained in Examples 1 and 2 and the unmodified biofibers obtained in Comparative Example 1.
[Fig. 7] Fig. 7 is a halftone image shown on a display presenting appearances of dispersions of the composite obtained in Example 1 and the unmodified biof ibers obtained in Comparative Examples 1 and 2.
[Fig. 8] Fig. 8 is a scanning electron micrograph of a composite obtained in Example 4.

[Description of Embodiments]

Hereinafter, the present invention will be described in detail based on preferred embodiments thereof.

<Method for Producing Surface-Modified Biofibers>

First, a method for producing surface-modified biofibers of the present invention is described. The method for producing surface-modified biofibers of the present invention comprises:

a first polymerization step of obtaining a hydrophilic block (A) made of a first polymer and arranged on surfaces of biofibers by conducting a living radical polymerization of a first monomer in a reaction solution containing the biofibers, the first monomer, and a solvent, and allowing the first polymer thus obtained to be attached to the surfaces of the biofibers; and
a second polymerization step of obtaining a hydrophobic block (B) made of a second polymer and stacked on an outside of the hydrophilic block (A) by adding a second monomer to the reaction solution after the first polymerization step, conducting a living radical polymerization of the second monomer, and polymerizing the second polymer thus obtained onto growing ends of the first polymer, wherein
the biofibers, the first polymer, the second polymer, and the solvent have surface free energies satisfying a condition expressed by the following formula (1):

$$E_{BF} > E_A > E_B > E_S \quad \cdots (1)$$

[in the formula (1), $E_{BF}$ represents the surface free energy of the biofibers, $E_A$ represents the surface free energy of the first polymer, $E_B$ represents the surface free energy of the second polymer, and $E_S$ represents the surface free energy of the solvent].

Note that, in the present invention, the hydrophilicity and the hydrophobicity of the hydrophilic block (A) and the hydrophobic block (B) are defined based on the relative affinity for water in a comparison between the first polymer in the hydrophilic block (A) and the second polymer in the hydrophobic block (B). A block made of a polymer having a higher surface free energy (i. e. , the first polymer) is referred to as the hydrophilic block, and a block made of a polymer having a lower surface free energy (i. e. , the second polymer) is referred to as the hydrophobic block.

[Biofibers]

Biobibers according to the present invention preferably have an aspect ratio of 1 or higher, which is expressed by a ratio between the longest diameter and the shortest diameter (longest diameter/shortest diameter), and a longest diameter of 10,000 nm or smaller. In the present invention, the biofibers each may be in a fibrous or particle form, which can be selected depending on the usage purpose of surface-modifiedbiof ibers obtained. The biofibers in the particle form preferably have an aspect ratio of 1 to 3, which is expressed by a ratio between the longest diameter and the shortest diameter (longest diameter/shortest diameter), and a particle diameter of 10,000 nm or smaller. The biofibers in the fibrous form preferably have an aspect ratio exceeding 3 (preferably 5 or higher), and a longest diameter of 10, 000 nm or smaller. In the present invention, the longest diameter and the shortest diameter of each biofiber can be determined by observation under a scanning electron microscope (SEM). The shortest diameter of a biofiber in the fibrous form is the maximum diameter of the cross-section of the biofiber (fiber) in a minor axis direction, and is a diameter of a circumscribed circle of the cross-section if the cross-section is not circular. Meanwhile, the particle diameter of a biofiber in the particle form is a diameter of a circumscribed circle of the cross-section of the particle.
Examples of the biofibers include fibers or particles made of polysaccharides such as cellulose, chitin, chitosan, regenerated cellulose regenerated by chemically taking out a component from a biological material, and bacterial cellulose derived from microorganisms. Among them, in the case where the first polymer described later is polyhydroxyethyl acrylate and the second polymer described later is polystyrene, fibers or particles made of cellulose are preferable from the viewpoints that the surface-modified biofibers tend to achieve enhancements in the stability and the dispersibility in a solvent, and be easily improved in a total content ratio of the first polymer and the second polymer. The cellulose may be crystalline or amorphous and be hydrous or non-hydrous, but more preferably is crystalline from the viewpoint that the better dispersibility in an organic solvent or a resin can be exhibited. As the cellulose, cellulose purified from natural cellulose or synthesized cellulose may be used, or any commercially available cellulose may be used as needed. If the production method of the present invention uses biofibers provided in an liquid dispersion, it is preferable to use the biofibers after removing water other than hydrated water by centrifugation.

Furthermore, the biofibers used in the production method of the present invention preferably have an average diameter of 0.3 to 10,000 nm and an aspect ratio of 10,000 or less, and more preferably have an average diameter of 0.3 to 10 and an aspect ratio of 1 to 300. Further, from the viewpoint of exhibiting a better dispersibility in a solvent containing a resin, the biofibers are preferably nanofibers (hereinafter, referred to as "bionanofibers" in some cases), and more preferably cellulose nanofibers. Specifically, the nanofibers preferably have an average diameter of 0.3 to 300 nm and an aspect ratio of 10,000 or less, and more preferably have an average diameter of 0.3 to 30 nm and an aspect ratio of 3 to 300. In the present invention, in the case of biofibers in the fibrous form (the aspect ratio exceeding 3), the average diameter of the biofibers is an average value of the shortest diameters, and can be obtained by measuring the shortest diameters of 200 biofibers (fibers) randomly selected, and calculating the average value of the measured shortest diameters. Meanwhile, in the case of biofibers in the particle form (the aspect ratio of 1 to 3), the average diameter of the biofibers is an average value of the particle diameters, and can be obtained by measuring the particle diameters of 200 biofibers (particles) randomly selected, and calculating the average value of the measured particle diameters.

As the biofibers according to the present invention, it is possible to favorably use biofibers obtained without conducting a treatment for introducing a reactive group onto the surfaces of the biofibers. Hence, it is preferable that no step of introducing a reactive group onto the surfaces of the biofibers be conducted in the production method of the present invention. Examples of the reactive group include polymerizable reactive groups (for example, methacryl group, acryl group, vinyl group, etc.) and reactive groups for bonding with the organic polymer (the first polymer and the second polymer), the reactive groups being groups (for example, carboxyl group, amino group, isocyanate group, acid anhydride group, etc.) other than the aforementioned polymerizable reactive groups. In the present invention, without having any influence by the treatment for introducing a reactive group, the biofibers and/or the polymer comprising the first polymer and the second polymer can sufficiently exhibit their intrinsic physical properties and functions, and a large amount of surface-modified biofibers having a sufficiently high stability can be easily obtained.

The method for introducing the polymerizable reactive group includes a method using a coupling agent having the polymerizable reactive group, a method using a surfactant having the polymerizable reactive group, or the like. As the coupling agent, there are a silane coupling agent, a titanate coupling agent, and so on. As the surfactant, there are carboxylic acid derivatives, phosphonic acid derivatives, phosphoric acid derivatives, amine derivatives, and sulfonic acid derivative, and so on.

Then, as a method for introducing the reactive group for bonding with the organic polymer, there are for example, a method using a coupling agent or a surfactant having the reactive group for bonding with the organic polymer, a method of chemically modifying a hydroxyl group or a salt such as a carboxylic acid salt on the surfaces with an acid, an alcohol, a halogenating reagent, an acid anhydride, an isocyanate, or the like. The coupling agent and the surfactant in this method are the same as mentioned above.

Moreover, from the viewpoint of further improving the stability of surface-modified biofibers obtained, it is preferable that no surface treatment with an alkylene glycol polymer or any other surfactant be conducted on the biofibers according to the present invention are preferably not subjected to any. Incidentally, biofibers subjected to the above treatment for introducing the reactive group or surface treatment can be detected by a method in which cross-sections of biofibers are observed under a scanning electron microscope or a transmission electron microscope , or an analysis of an infrared absorption spectrum.

[First Monomer, First Polymer]

The first monomer according to the present invention may be any monomer as long as a polymer obtained by polymerizing the monomer can be any of the following first polymers that satisfy the condition expressed by the above formula (1). A general monomer as the first monomer cannot be specified because it also depends on the types of the biofibers and the second polymer described below. However, a hydrophilic radical polymerizable monomer is preferable from the viewpoint that the surface free energy of the obtained first polymer tends to easily satisfy the condition expressed by the above formula (1).

As the hydrophilic radical polymerizable monomer, there are monomers having a hydrophilic group and a vinyl group, and specific examples thereof include acrylic acid, methacrylic acid, acrylamide, allyl acrylate, methyl acrylate, ethyl acrylate, acrylonitrile, methyl methacrylate, glycidyl acrylate, glycidyl methacrylate, hydroxyethyl acrylate, acryloyl chloride, methacryloyl chloride, allylaceticacid, allyl alcohol, allylchloride, allyl amide, allyl isocyanate, methylvinyl methyl ketone, vinyl acetate, vinyl chloride, vinyl ethyl ester, vinyl ethyl ketone, sodium p-styrenesulfonate, and the like. One of these monomers may be used alone, or two or more of them may be used in combination. The first polymer may be obtained by using any of hydrophobic radical polymerizable monomers described below in combination as long as the surface free energy of the first polymer obtained satisfies the condition expressed by the above formula (1) . Especially, from the viewpoints that there are tendencies to further improve the stability of surface-modified biofibers obtained and to more suppress aggregation of the biofibers in the polymerization process during production, the first monomer according to the present invention is preferably at least one selected from the group consisting of methyl acrylate, ethyl acrylate, hydroxyethyl acrylate, methyl methacrylate, and hydroxyethyl methacrylate.

The first polymer obtained by polymerizing such a first monomer is preferably a linear or branched polymer obtained by homopolymerizing or copolymerizing one or more of the hydrophilic radical polymerizable monomers. Among them, from the viewpoint of tendencies to further improve the stability of surface-modified biofibers obtained and to more suppress aggregation of the biofibers during the polymerization process during production, the first polymer is preferably at least one selected from the group consisting of polymethyl acrylate, polyethyl acrylate, polyhydroxyethyl acrylate, polymethyl methacrylate, and polyhydroxyethyl methacrylate.

[Solvent]

The solvent according to the present invention needs to be a solvent in which the first monomer and the second monomer described later can be dissolved or mixed, and which satisfies the condition expressed by the above formula (1) . A general solvent as such a solvent cannot be specified because it also depends on the types of the first monomer, the first polymer, the second monomer described later, and the second polymer described later, but examples thereof include toluene, chloroform, dichloromethane, and tetrahydrofuran. One of these solvents may be used alone, or two or more of them may be used in combination.

[Second Monomer, Second Polymer]

The second monomer according to the present invention may be any monomer as long as a polymer obtained by polymerizing the monomer can be a second polymer satisfying the condition expressed by the above formula (1). A general monomer as the second monomer cannot be specified because it depends on the types of the first polymer and the solvent. However, a hydrophobic radical polymerizable monomer is preferable from the viewpoint that the surface free energy of the obtained second polymer tends to easily satisfy the condition expressed by the above formula (1).

The hydrophobic radical-polymerizable monomer may be a monomer not having any hydrophilic group but having a vinyl group, and examples thereof include styrene, divinylbenzene, methylstyrene, butyl acrylate, ethyl methacrylate, butyl methacrylate, lauryl acrylate, lauryl methacrylate, stearyl acrylate, stearyl methacrylate, behenyl acrylate, behenyl methacrylate, cyclohexyl acrylate, cyclohexyl methacrylate, trifluoropropyl acrylate, trifluoropropyl methacrylate, isoprene, 1,4-butadiene, and the like. One of these monomers may be used alone, or two or more of them may be used in combination. The second polymer may be obtained by using any of the above hydrophilic radical polymerizable monomers in combination as long as the surface free energy of the second polymer obtained satisfies the condition expressed by the above formula (1). Among them, the second monomer according to the present invention is preferably styrene from the viewpoints that there are tendencies to further improve the stability of surface-modified biofibers obtained and to achieve a better dispersibility in a resin or an organic solvent such as toluene.

The second polymer obtained by polymerizing such a second monomer is preferably a linear or branched polymer obtained by homopolymerizing or copolymerizing one or more of the hydrophobic radical polymerizable monomers. Among them, polystyrene is preferable from the viewpoints that there are tendencies to further improve the stability of surface-modif iedbiof ibers obtained and to achieve abetter dispersibility in a resin or an organic solvent such as toluene.

Here, as for the first and second monomers and the first and second polymers according to the present invention, only the first and second polymers have to satisfy the condition expressed by the above formula (1). For example, it is also preferable to use hydroxyethyl methacrylate as the first monomer, methyl methacrylate as the second monomer, thereby obtaining polyhydroxyethyl methacrylate as the first polymer, and polymethyl methacrylate as the second polymer.

[Surface Free Energy]

In the production method of the present invention, the biofibers, the first polymer, the second polymer, and the solvent need to have surface free energies satisfying a condition expressed by the following formula (1):

$$E_{BF} > E_A > E_B > E_S \quad \cdots (1)$$

[in the formula (1), $E_{BF}$ represents the surface free energy of the biofibers, $E_A$ represents the surface free energy of the first polymer, $E_B$ represents the surface free energy of the second polymer, and Es represents the surface free energy of the solvent]. In any of the cases where $E_{BF}$ is not higher than $E_A$, $E_A$ is not higher than $E_B$, and $E_B$ is not higher than $E_S$, the first polymer cannot be sufficiently and stably attached (preferably adsorbed) onto the surfaces of the biofibers, or the second polymer cannot be sufficiently and stably attached (preferably adsorbed) onto the surface of the hydrophilic block (A). Moreover, the surface-modified biofibers thus obtained decrease in the dispersibility in a solvent.

Note that the surface free energy refers to the excess energy of molecules (or atoms) at a surface of a solid or a liquid in comparison with molecules (or atoms) inside the substance. In the present invention, the surface free energy refers to a surface free energy at 20°C. In the present invention, the surface energy can be determined by a known method. For example, the surface free energy of a solid can be determined by measuring the water droplet contact angle of water on a surface of a solid sample, and then finding the surface free energy from the measured value and the known surface free energy of water by using the Young equation. Meanwhile, the surface free energy of a liquid can be determined by measurement based on the ring method using a du Noüy tensiometer. Specifically, the surface free energy of the biofibers according to the present invention can be determined by the above-described method for measuring the surface free energy of a solid in which a substrate is prepared from the same type of biofibers and is used as a solid sample after the surface of the substrate is cleaned. Meanwhile, the surface free energy of each of the first polymer and the second polymer according to the present invention can be determined by the above-described method for measuring the surface free energy of a solid in which a sample film is prepared from the polymer concerned, and is used as a solid sample after the surface of the film is cleaned. Then, the surface free energy of the solvent according to the present invention can be determined by the foregoing ring method.

In general, the surface free energy of the biofibers ($E_{BF}$) is extremely higher than the surface free energy ($E_A$) of the first polymer. From the viewpoint that the surface-modified biofibers obtained can achieve further improvements in the stability and the dispersibility in a solvent, a difference between $E_{BF}$ and $E_A$ ($E_{BF}-E_A$) is preferably 0.1 or more, and more preferably 0.3 or more.

Then, a difference between the surface free energy ($E_A$) of the first polymer and the surface free energy ($E_B$) of the second polymer ($E_A-E_B$) is preferably 0.1 or more, and more preferably 0.3 or more from the viewpoint that the surface-modified biofibers obtained can achieve further improvements in the stability and the dispersibility in a solvent.

Further, a difference between the surface free energy ($E_B$) of the second polymer and the surface free energy ($E_S$) of the solvent ($E_B-E_S$) is preferably 0.1 or more, and more preferably 0.3 or more from the viewpoint that the surface-modified biofibers obtained can achieve further improvements in the stability and the dispersibility in a solvent.

[Production Method]

In the method for producing surface-modified biofibers of the present invention, first, a hydrophilic block (A) made of the first polymer is obtained by conducting a living radical polymerization of the first monomer in a reaction solution containing the biofibers, the first monomer, and the solvent, and then allowing the first polymer thus obtained to be attached and arranged onto the surfaces of the biofibers (a first polymerization step).

In the first polymerization step according to the production method of the present invention, the living radical polymerization of the first monomer is conducted in the reaction solution containing the biofibers, the first monomer, and the solvent. As a method for the living radical polymerization, a known method can be employed as appropriate. Examples of the method include the nitroxide-mediated radical polymerization (NMP), the reversible addition-fragmentation chain transfer (RAFT) polymerization, and the atom transfer radical polymerization (ATRP).

An initiator used for the living radical polymerization is not particularly limited, and examples thereof include azobisisobutyronitrile (AIBN), benzoyl peroxide (BPO), di-tert-butyl peroxide (DBPO), 2,2'-azobis(2,4-dimethylvaleronitrile) (V-65), 2,2'-azobis(4-methoxy-2,4-dimethylvaleronitrile) (V-70), ethyl 2-bromoisobutyrate (EBIB), and methyl 2-chloropropionate (MCP). In addition, a catalyst used for the living radical polymerization is not particularly limited, either, and examples thereof include 2,2,6,6-tetramethylpiperidin-1-oxyl (TEMPO); Cu(I)Cl (stabilized with a ligand); Cu(I)Br (stabilized with a ligand); dithiobenzoates such as cumyl dithiobenzoate (CDB); trithiocarbonates such as benzyl propyl trithiocarbonate; and benzyl octadecyl trithiocarbonate. The concentration of each of the initiator and the catalyst is preferably 0.001 to 100 mM in the reaction solution, for example, although it depends on the types of the initiator and the catalyst.

In the first polymerization step according to the production method of the present invention, general conditions for the living radical polymerization cannot be specified because the conditions vary depending on the reaction method employed and the types of the biofibers and the first monomer, but the conditions are preferably those under which the polymerization of the first monomer is completed. A reaction temperature is preferably 20 to 150°C, and a reaction time is preferably 2 to 48 hours. In the production method of the present invention, appropriate adjustment of these conditions for the living radical polymerization makes it possible to control the number average molecular weight, the molecular weight distribution, the content, and the like of the first polymer in the surface-modified biofibers obtained, thereby obtaining desirable surface-modified biofibers depending on use purpose.

A mass ratio between the biofibers and the first monomer in the reaction solution (a mass of the biofibers : a mass of the first monomer) is preferably 1:100 to 100:1, and more preferably 1:10 to 10:1. If the ratio of the first monomer is less than the lower limit, the coating ratio of the first polymer on the surfaces of the biofibers tends to decrease. Meanwhile, if the ratio of the first monomer exceeds the upper limit, the content ratio of the biofibers in the surface-modified biofibers obtained tends to decrease.

In the first polymerization step according to the production method of the present invention, the living radical polymerization of the first monomer is conducted in the reaction solution. As a result, the obtained first polymer becomes insoluble in or more immiscible with the solvent to be precipitated, and the precipitated first polymer is attached (preferably adsorbed) and accumulated onto the surfaces of the biofibers. Consequently, it is possible to obtain the hydrophilic block (A) made of the first polymer arranged on the surfaces of the biofibers.

The production method of the present invention may further comprise a step of separating, by centrifugation, the biofibers covered with the first polymer from the unpolymerized first monomer and the first polymer not attached to the biofibers, after the first polymerization step.

In the method for producing surface-modified biofibers of the present invention, subsequently, a hydrophobic block (B) made of the second polymer is obtained by adding the second monomer to the reaction solution after the first polymerization step, conducting a living radical polymerization of the second monomer, and polymerizing the second polymer thus obtained onto growing ends of the first polymer, to stack the second polymer on an outside of the hydrophilic block (A) (a second polymerization step).

In the second polymerization step according to the production method of the present invention, the second monomer is added to the reaction solution after the first polymerization step to conduct a living radical polymerization of the second monomer. The type of such a living radical polymerization and the types of an initiator and catalyst for the polymerization are the same as those described in the first polymerization step.

In addition, in the second polymerization step according to the production method of the present invention, conditions for the living radical polymerization are the same as those described in the first polymerization step as well. Also, general conditions therefor cannot be specified because the conditions vary depending on the reaction method employed and the types of the first monomer and the second monomer. However, in a preferable example of the conditions, a reaction temperature is 20 to 150°C, and a reaction time is 2 to 48 hours. In the production method of the present invention, appropriate adjustment of these conditions for the living radical polymerization makes it possible to control the number average molecular weight, the molecular weight distribution, the content, and the like of the second polymer in the surface-modified biofibers obtained, thereby obtaining desirable surface-modified biofibers depending on use purpose.

A mass ratio between the first monomer used in the first polymerization step and the second monomer (a mass of the first monomer:a mass of the second monomer) is preferably 1:1 to 1:1,000, and more preferably 1:2 to 1:500. If the ratio of the second monomer is less than the lower limit, the surfaces of the surface-modified biofibers obtained tend to have insufficient hydrophobicity. Meanwhile, if the ratio of the second monomer exceeds the upper limit, the polymer comprising the first polymer and the second polymer tends to easily desorb from the surfaces of the biofibers.

In the second polymerization step according to the production method of the present invention, the living radical polymerization of the second monomer is conducted in the reaction solution. As a result, the first polymer and the second polymer thus obtained are polymerized to form a block polymer comprising the hydrophilic block (A) and the hydrophobic block (B) (hereinafter, referred to as an "organic polymer" in some cases). In addition, since the surface free energy of the second polymer obtained is higher than the surface free energy of the solvent, a composite (surface-modified biofibers) can be obtained in which the hydrophobic block (B) made of the second polymer is stacked on the outside of the hydrophilic block (A) made of the first polymer. In this way, according to the production method of the present invention, it is possible to obtain surface-modified biofibers of the present invention comprising: the biofibers, the hydrophilic block (A) made of the first polymer and arranged on the surfaces of the biofibers; and the hydrophobic block (B) made of the second polymer and stacked on the outside of the hydrophilic block (A).

The production method of the present invention preferably further comprises a step of separating, by centrifugation, the biofibers covered with the block polymer (surface-modified biofibers) from the unpolymerized monomers (the first monomer and/or the second monomer) and the organic polymer not attached to the biofibers, after the second polymerization step.

In the second polymerization step according to the production method of the present invention, a dispersion can be obtained in which the surface-modified biofibers of the present invention are dispersed in the solvent. In the present invention, the surface-modified biofibers of the present invention can be obtained by recovering the surface-modified biofibers from the dispersion by a method such as filtration or centrifugation. In addition, the obtained dispersion as it is may be employed as the dispersion of the present invention. Instead, a dispersion and/or a resin composition of the present invention may be prepared by re-dispersing the recovered surface-modified biofibers in a solvent and/or a resin, as appropriate.

According to the production method of the present invention, large amounts of the first polymer and the second polymer can be sufficiently stably attached (preferably adsorbed) onto the biofibers, and the average diameter and the aspect ratio of the obtained surface-modifiedbiofibers can be easily controlled by adjusting the average diameter and the aspect ratio of the biofibers and the degrees of polymerizations of the first polymer and the second polymer. In addition, according to the production method of the present invention, the surface-modified biofibers of the present invention can be mass-produced (on the order of grams or more, and further on the order of metric tons or more) without any limitation on the type of biofibers.

<Surface-Modified Biofibers and Liquid Dispersion and Resin Composition Comprising the Surface-Modified Biofibers>

Next, description is provided for surface-modified biofibers of the present invention, a liquid dispersion comprising the surface-modified biofibers, and a resin composition comprising the surface-modified biofibers. The surface-modified biofibers of the present invention are surface-modified biofibers obtained by the method for producing surface-modified biofibers of the present invention,
the surface-modified biofibers comprising:

the biofibers;
the hydrophilic block (A) made of the first polymer and arranged on surfaces of the biofibers; and
the hydrophobic block (B) made of the second polymer and arranged on an outside of the hydrophilic block (A), wherein
the biofibers , the first polymer, and the second polymer have surface free energies satisfying a condition expressed by the following formula (2):

$$E_{BF} > E_A > E_B \quad \cdots (2)$$

[in the formula (2), $E_{BF}$ represents the surface free energy of the biofibers, $E_A$ represents the surface free energy of the first polymer, and $E_B$ represents the surface free energy of the second polymer].

The aforementioned surface-modifiedbiofibers of the present invention obtained by the production method of the present invention each have a structure in which the hydrophobic block (B) having a relatively low hydrophilicity is stacked on the outside of the hydrophilic block (A) having a relatively high hydrophilicity. Hence, even though the surfaces of the biofibers are not subject to a treatment for introducing a polymerizable reactive group or a reactive group for bonding with an organic polymer, the organic polymer is stably arranged on the surfaces of the biofibers, so that the excellent stability and dispersibility can be exhibited. In addition, since the hydrophilic block (A) is arranged on the surfaces of the biofibers without any agent such as a coupling agent interposed therebetween as described above, the biofibers and/or the organic polymer can sufficiently exhibit their intrinsic physical properties and functions.
In the surface-modified biofibers of the present invention, the first polymer and the second polymer are bonded by polymerization to form the block polymer (organic polymer) comprising the hydrophilic block (A) and the hydrophobic block (B), and the organic polymer is stably attached(preferably adsorbed)ontothe biofibers. Hence, even when the solvent is a good solvent for the second polymer, the polymer is not dissolved into the solvent phase, and the hydrophobic block (B) made of the second polymer is stably arranged on the outside of the hydrophilic block (A) made of the first polymer.
From the viewpoint that the better stability and dispersibility are exhibited, the hydrophilic block (A) in the organic polymer is preferably adsorbed (physically adsorbed) onto the biofibers by an intermolecular force therebetween in the surface-modified biofibers of the present invention. Unlike a case where an organic polymer as a modifier is attached (adsorbed) onto the biofibers in a state where the modifier itself is dissolved or dispersed in a solvent, the present invention involves a phenomenon in which the organic polymer formed by polymerization and the surfaces of the biofibers generate adsorption sites while interacting with each other all the time. As a result, the organic polymer causes less self-stacking and entanglement and accordingly more adsorption sites exist between the organic polymer and the surfaces of the biofibers. For this reason, in the surface-modified biofibers of the present invention, the adsorption force between the hydrophilic block (A) in the organic polymer and the biofibers is sufficiently large, so that the stability is sufficiently good. For example, when the surface-modified biofibers are dispersed in a good solvent (described later) for the first polymer and the second polymer, and are left to stand at 20°C for 24 hours or longer, such adsorption strength can make an amount of the organic polymer desorbed from the biofibers as small as less than 10% by mass of the total amount of the organic polymer. In contrast, when the organic polymer itself dissolved or dispersed in a solvent is adsorbed onto the biofibers, several tens or more percent by mass of the organic polymer desorbs.

In the surface-modified biofibers of the present invention, the number average molecular weight of the first polymer and the second polymer (organic polymer) is preferably 3,000 to 1,000,000 g/mol, and more preferably 5,000 to 500,000 g/mol. If the number average molecular weight is less than the lower limit, the dispersion stability of the polymer in a resin tends to decrease. Meanwhile, if the number average molecular weight exceeds the upper limit, the dispersion stability of the polymer in a liquid solvent tends to decrease.

Moreover, in the surface-modified biofibers of the present invention, the molecular weight distribution (weight average molecular weight/number average molecular weight) of the first polymer and the second polymer (organic polymer) is preferably 1.05 to 2.0, and more preferably 1. 05 to 1.7. If the molecular weight distribution exceeds the upper limit, chains of the organic polymer tend to be entangled with each other, and the dispersibility in a solvent containing a resin tends to decrease.

In addition, in the surface-modified biofibers of the present invention, the mass ratio between the first polymer and the second polymer (a mass of the first polymer : a mass of the second polymer) is preferably 1:1 to 1:1,000, more preferably 1 : 1 to 1:500, and even more preferably 1: 2 to 1:500. If the ratio of the first polymer is less than the lower limit, the surfaces of the surface-modified biofibers tend to be insufficiently hydrophobic. Meanwhile, if the ratio of the first polymer exceeds the upper limit, the organic polymer tends to desorb from the surfaces of the biofibers.

Further, in the surface-modified biofibers of the present invention, the total content of the first polymer and the second polymer (the organic polymer) in terms of the number of molecules (the number of chains) per unit surface area of the biofibers is preferably 0.0005 to 1.0 chains/nm$^2$, and more preferably 0.001 to 0.5 chains/nm$^2$. If the content per unit surface area is less than the lower limit, the dispersibility in a solvent containing a resin tends to decrease. Meanwhile, if the content exceeds the upper limit, the filling rate of the biofibers that can be filled tends to decrease. Note that, according to the production method of the present invention, the large amounts of the first polymer and the second polymer can be stably attached (preferably adsorbed) on to the biofibers as described above, so that the total content of the organic polymer can be 0.001 to 1.0 chains/nm$^2$.

Furthermore, in the surface-modified biofibers of the present invention, the total content ratio of the first polymer and the second polymer (organic polymer) is preferably 1 to 20% by mass, although it depends on the surface area and mass of the biofibers. If the content ratio is less than the lower limit, the dispersibility in a solvent containing a resin tends to decrease. Meanwhile, if the content ratio exceeds the upper limit, the content ratio of the biofibers that can be dispersed in a solvent tends to decrease. Note that, according to the production method of the present invention, the large amounts of the first polymer and the second polymer can be stably attached (preferably adsorbed) onto the biofibers as described above , so that the total content ratio of the organic polymer can be 2 to 90% by mass.

Here, in the present invention, the total content and the total content ratio of the first polymer and the second polymer (organic polymer) can be determined by the specific surface area of the biofibers and measurement results by TGA (thermogravimetricanalysis), FTIR (Fourier transform infrared spectroscopy), NMR (nuclear magnetic resonance), and the like.

From the viewpoint that a much better stability and dispersibility tend to be exhibited, the surface-modified biofibers of the present invention are preferably such that the surface of each biofiber is coated with the organic polymer completely without any portion left bared, and more preferably include the hydrophilic polymer layer (A) made of the first polymer and attached and arranged onto the surfaces of the biofibers, and the hydrophobic polymer layer (B) made of the second polymer and stacked on the surface of the hydrophilic polymer layer (A).

When the first polymer forms the hydrophilic polymer layer (A), a coating ratio on the surfaces of the biofibers is preferably 50% by area or more, and more preferably 80% by area or higher. In addition, when the second polymer forms the hydrophobic polymer layer (B), a coating ratio on the surface of the hydrophilic polymer layer (A) is preferably 30% by area or more, and more preferably 50% by area or more. In addition, under the above conditions, the hydrophilic polymer layer (A) preferably has a thickness of 0. 1 to 20 nm and the hydrophobic polymer layer (B) preferably has a thickness of 0.2 to 100 nm.

Moreover, the surface-modified biofibers of the present invention preferably have an average diameter of 0.9 to 10,000 nm, and an aspect ratio of 10,000 or less, and more preferably an average diameter of 0.9 to 1,000 nm, and an aspect ratio of 1 to 300. In the case where the surface-modified biofibers of the present invention are in a fibrous form, it is more preferable that the average diameter be 0.9 to 30 nm, and the aspect ratio be 3 to 300. If the average diameter is smaller than the lower limit, the content ratio of the organic polymer in the surface-modified biofibers tends to be excessively high. Meanwhile, if the average diameter exceeds the upper limit, the dispersibility in a solvent or a resin tends to decrease. Then, if the aspect ratio exceeds the upper limit, the surface-modified biofibers aggregate more easily, and accordingly the dispersibility in a solvent containing a resin tend to decrease.

Note that, in the present invention, the thicknesses of the hydrophilic polymer layer (A) and the hydrophobic polymer layer (B) and the average diameter and the aspect ratio of the surface-modified biofibers can be measured by observation under a scanning electron microscope (SEM) . In addition, since the surface-modified biofibers of the present invention are very stable and can remain in a solid state even when separated from a dispersion medium, the average diameter and the aspect ratio of the surface-modified biofibers are determined in a state where the surface-modified biofibers are separated from the dispersion medium (solvent and/or resin).

In addition, the surface-modified biofibers of the present invention may further comprise metal particles such as metal nanoparticles, a surfactant, a polymer having a surface-activating ability, a living radical polymerization initiator, a living radical polymerization catalyst, and the like, as long as an effect of the present invention is not impaired.

Next, a liquid dispersion of the present invention is described. The liquid dispersion of the present invention comprises the surface-modified biofibers of the present invention and a solvent. Because of the use of the surface-modified biofibers of the present invention, the liquid dispersion of the present invention has an excellent dispersibility.

The solvent is preferably a good solvent for the second polymer from the viewpoints that the surface-modified biofibers of the present invention tend to be easily dispersed, because the solvent allows the inter-biofiber distances to be maintained by causing swelling of the hydrophobic block (B) stacked on the surfaces of the biofibers. In the present invention, the good solvent refers to a solvent in which a polymer to be dissolved has a theta temperature (Flory temperature, a temperature at which the second virial coefficient A2 equals to 0, where the stacking of polymer chains one another appears to be negligible, i. e. , a temperature at which the polymer chains behave as ideal Gaussian chains) being lower than room temperature (20°C). As such solvent, a general solvent cannot be specified because it also depends on the type of the second polymer, but examples of the solvent include toluene, chloroform, dichloromethane, and tetrahydrofuran. One of these solvents may be used alone, or two or more thereof may be used in combination. Note that it is also possible to use a poor solvent for the second polymer as the solvent in such a manner that the surfaces of the surface-modified biofibers are swelled in the good solvent and the surface-modified biofibers are dispersed in the good solvent, and then the solvent is exchanged with the poor solvent. Note that a poor solvent in the present invention refers to a solvent in which the theta temperature is room temperature (20°C) or higher.

In addition, a resin composition can be obtained instead of the dispersion of the present invention by using any of various resins such as an epoxy resin, a phenolic resin, a melamine resin, an olefin resin, a fluororesin, and an acrylic resin instead of or in addition to the solvent.

Each of the dispersion and the resin composition may further comprise metal particles such as metal nanoparticles, a surfactant, a polymer having a surface-activating ability, a living radical polymerization initiator, a living radical polymerization catalyst, and the like, as long as an effect of the present invention is not impaired.

[Examples]

Hereinafter, the present invention will be described more specifically on the basis of Examples and Comparative Examples. However, the present invention is not limited to Examples below. Note that measurements and evaluations were conducted by the following methods in Examples and Comparative Examples.

<Surface Observation>

A composite or unmodified biof ibers obtained in each of Examples and Comparative Examples were cast on mica and coated with Pt. Then, the state of the surface of the composite or the surfaces of the unmodified biofibers were observed by using a scanning electron microscope (SEM, product name: S-4800, manufacturer: Hitachi High-Technologies Corporation). In addition, the longest diameter and the shortest diameter of the composites or the unmodified biof ibers were measured, and then the aspect ratio (longest diameter/shortest diameter) and the average diameter (the average of the shortest diameters of 200 fibers randomly selected or the average of the particle diameters of 200 particles randomly selected) were calculated. Note that the shortest diameter of the fiber was defined as the maximum diameter of the cross-section of each biofiber in the minor axis direction, and as a diameter of a circumscribed circle of the cross-section if the cross-section was not circular. Then, the particle diameter of the particle was defined as a diameter of a circumscribed circle of the cross-section of each biofiber particle.

<GPC Measurement>

The organic polymer not attached to the biofibers and recovered by centrifugation from a reaction solution after the reaction in each of Examples and Comparative Examples was eluted by using a gel permeation chromatograph (GPC, product name: Alliance 2695 system, manufacturer: WATERS) under the following conditions: Columns: guard column KF-G, KF-803 L with an exclusion limit of $7\times10^4$ D, and KF-805 L with an exclusion limit of $4\times10^6$ D (D: dalton (a unit having the same dimension as g mol$^{-1}$)), which were manufactured by Shodex; Detector: refractive index detector (RI); Mobile phase: tetrahydrofuran (THF); Elution rate: 1 mL/min; and Column temperature: 35°C. In addition, calibration was conducted by using a PS standard sample (Polymer Standard Service, PSS-Kit(PS), $M_p$. (peak top molecular weight) : 682-1.67 $\times$ $10^6$ D) and a PMMA standard sample (PSS-Kit (PMMA), Mp. : 102-9.81$\times10^5$ D), and then the number average molecular weight (Mn [g/mol]), the weight average molecular weight (Mw [g/mol]), and the molecular weight distribution (Mw/Mn) of each organic polymer were calculated. Note that the obtained Mn, Mw, and Mw/Mn were assumed to be equivalent respectively to the Mn, Mw, and Mw/Mn of the organic polymer attached to the biofibers.

<Dispersibility Evaluation>

A 20% by mass dispersion of the composite or the unmodified biofibers obtained in each of Examples and Comparative Examples was prepared in each of dichloromethane ($CH_2Cl_2$) and tetrahydrofuran (THF), and this dispersion was allowed to stand at 20°C for 1 hour. Then, the dispersibility was visually observed and evaluated by using the following criteria:

A: The dispersibility was good, and no precipitates were observed.
B: Precipitates were observed, and the dispersion was almost separated into a supernatant and the precipitates.
C: Precipitates were formed immediately after the preparation of the dispersion (within 5 minutes), and the dispersion was separated into a supernatant and the precipitates.

<FTIR Measurement>

The composite or the unmodified biofibers obtained in each of Examples and Comparative Examples were measured by Fourier transform infrared spectroscopy (FTIR) with the KBr pallet method. First, 10 mg of the well-dried composite or the unmodified biofibers was mixed with 1 g of KBr powder using a mortar, and then the resultant mixture was formed into a KBr disk sample. Subsequently, using a Fourier transform infrared spectrophotometer ("FTS-7000", manufactured by Digilab, Inc.), an FTIR spectrum was obtained by a measurement under the conditions of a resolution of 2 cm$^{-1}$ and scan times of 32.

(Example 1 RAFT)

First, a Cellulose microcrystals suspension (derived from Gluconacetobacter (acetic acid bacteria), 0.2% (w/v), manufactured by Synaptech Inc.) was centrifuged at 15,000 rpm at 10°C for 20 minutes to obtain precipitated crystalline cellulose nanofibers (hydrated cellulose nanocrystals) were directly used as biofibers. The hydrated cellulose nanocrystals were in a fibrous form, and had a diameter of 10 to 30 nm (average diameter: 20 nm), an aspect ratio of 30 to 300, and a surface free energy of 47 mN/m or more.

Next, in an argon-filled glovebox, a dichloromethane solution was prepared in which 7.8 mM of 2-cyano-2-propyl dodecyl trithiocarbonate, 1.5 mM of 2,2'-azobis(4-methoxy-2,4-dimethylvaleronitrile) (V-70), and 1 g of 2-hydroxyethyl acrylate (HEA, surface free energy of poly(2-hydroxyethyl acrylate) (PHEA): 37.8 mN/m) were added to 2 mL of dichloromethane ($CH_2Cl_2$, surface free energy: 27.89mN/m), andwasstoredinafreezer (-35°C). Subsequently, in the same glovebox, 1 g of the biofibers (hydrated cellulose nanocrystals) prepared above, and 2 mL of the dichloromethane solution were introduced into a test tube with a screw cap and stirred to prepare a reaction solution. This reaction solution was placed in a Vortex stirrer at room temperature and polymerization was carried out with stirring. Fourteen hours after the start of the polymerization, 3 g of styrene (ST, water droplet contact angle on polystyrene: 84° , surface free energy: 34.5 mN/m) was added to the reaction solution, and the reaction was further allowed to proceed for 24 hours. Then, the reaction solution was taken out of the glovebox, and the polymerization was completely stopped by adding dichloromethane which was made rich in oxygen in advance. Subsequently, an operation in which the reaction solution after the reaction was centrifuged at 15,000 rpm for 30 minutes and the supernatant was removed was repeated three times. Thus, the organic polymer not attached to the biofibers was obtained in the removed supernatant, and the fibrous composite (surface-modified biofibers) in which the organic polymer was attached to the biofibers was obtained as the precipitates.

(Example 2)

In Example 2, an organic polymer not attached to biofibers and a fibrous composite (surface-modified biofibers) in which the organic polymer was attached to the biof ibers were obtained in the same manner as in Example 1, except that tetrahydrofuran (THF, surface free energy: 26.4 mN/m) was used instead of dichloromethane.

(Example 3)

In Example 3, an organic polymer not attached to biofibers and a fibrous composite (surface-modified biofibers) in which the organic polymer was attached to the biofibers were obtained in the same manner as in Example 1, except that fibrous amorphous cellulose nanofibers (high purity cellulose powder for distribution chromatography, longest diameter: 20,000 nm, surface free energy: 47 mN/m or more, manufactured by Sigma-Aldrich Co. LLC) were used instead of the crystalline cellulose nanofibers.

(Example 4 ATRP)

First, inanargon-filledglovebox, a dichloromethane solution was prepared in which 71 mM of 2-bromoisobutyrate (EBIB), 141 mM of Cu(I)Cl, 290 mM of 4,4'-dinonyl-2,2'-dipyridyl(dNbpy) and 0.5 g of 2-hydroxyethyl methacrylate (HEMA, surface free energy of poly(2-hydroxyethyl methacrylate): 37.1 mN/m) were added to 2 mL of dichloromethane (surface free energy: 28.9mN/m), and was stored in a freezer (-35°C). Subsequently, in the same glovebox, 1 g of biofibers (particles made of cellulose, average diameter (average particle diameter) : 2 $\mu$m, aspect ratio: 1, surface free energy: 47 mN/m or more), and 2 mL of the dichloromethane solution were introduced into a test tube with a screw cap and stirred to prepare a reaction solution. Then, this reaction solution was set to an aluminum block heater heated to 50°C in advance to start the polymerization. Twelve hours after the start of the polymerization, 1. 5 g of methyl methacrylate (MMA, surface free energy of polymethyl methacrylate: 34.5 mN/m) was added to the reaction solution, and the reaction was further allowed to proceed for 24 hours. Then, the reaction solution was taken out of the heater and the glovebox, and the polymerization was completely stopped by adding chloroform which was made rich in oxygen in advance. Subsequently, an operation in which the reaction solution after the reaction was centrifuged at 15,000 rpm for 30 minutes and the supernatant was removed was repeated three times. Thus, the organic polymer not adsorbed onto the biofibers was obtained in the removed supernatant, and the particle composite (surface-modified biofibers) in which the organic polymer adsorbed onto the biofibers was obtained as the precipitates.

(Comparative Example 1)

The biofibers (unmodified biofibers) used in Example 1 were used, as they were, for the measurements and evaluations.

(Comparative Example 2)

The biofibers (unmodified biofibers) used in Example 3 were used, as they were, for the measurements and evaluations.

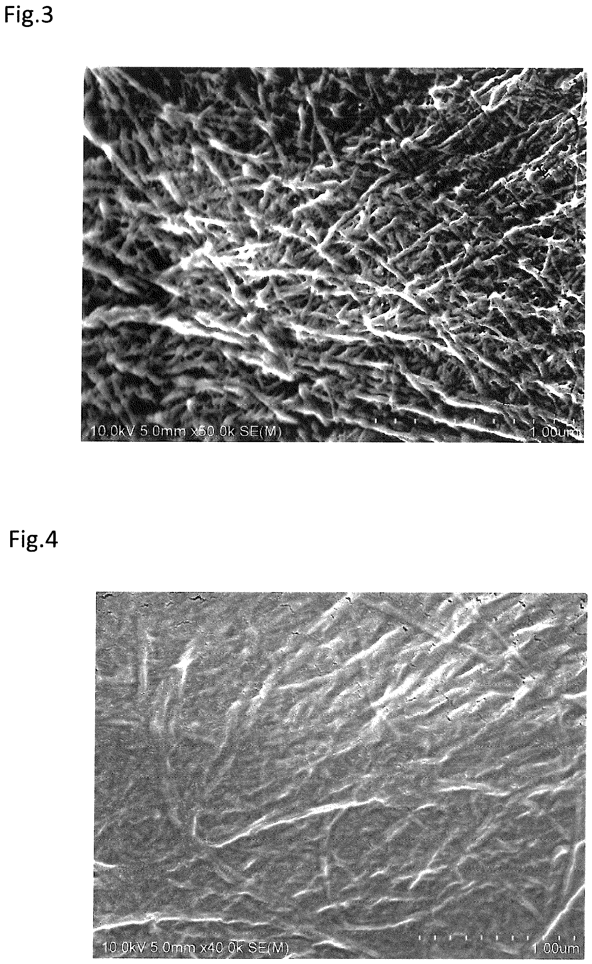

The composites and the unmodified biofibers obtained in Examples and Comparative Examples were subjected to the surface observation. Figs. 2 to 5 show SEM photographs of Example 1, Comparative Example 1, Example 3, and Comparative Example 2, respectively. As is apparent from the results shown in Figs. 2 and 4, it was found that each of the composites (surface-modified biofibers) obtained by the production method of the present invention had a smooth surface, and the surfaces of the biofibers (cellulose nanofibers) were coated with the organic polymer. In addition, the fibrous composite obtained in Example 1 had an aspect ratio in a range from 30 to 300 and an average diameter of 25 nm. Meanwhile, the fibrous composite obtained in Example 2 had an aspect ratio in a range from 30 to 300 and an average diameter of 25 nm.

Moreover, in the fibers obtained in Example 1, the organic polymer attached to the biofibers had an Mn (g/mol) of 40,000 to 45,000 g/mol and an Mw/Mn of about 1.7.

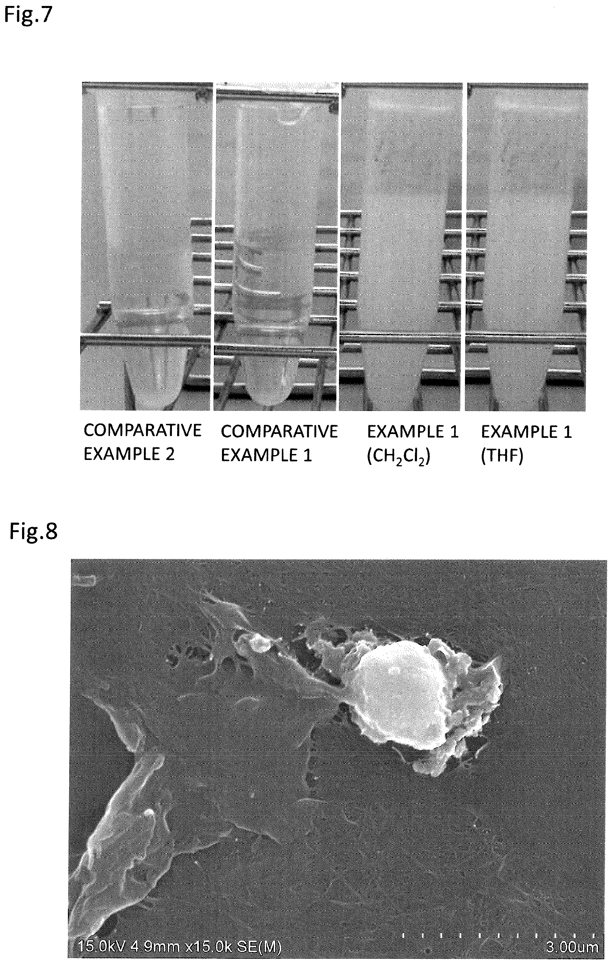

In addition, Fig. 8 shows an SEM photograph of Example 4. As is apparent from the result shown in Fig. 8, it was found that the composite (surface-modified biofibers) obtained by the production method of the present invention also had a smooth surface, and the surfaces of the biofibers (cellulose particles) were coated with the organic polymer. In the particle composite obtained in Example 4 , the organic polymer attached to the biofibers had an Mn (g/mol) of 41,000 g/mol and an Mw/Mn of 1.55.

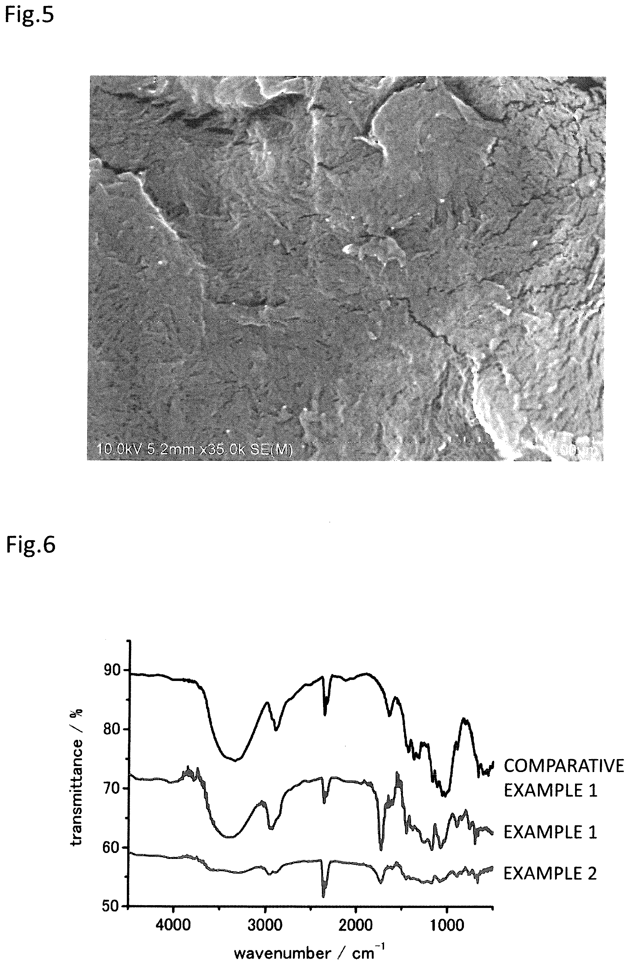

Further, FTIR measurements were conducted on the composites and the unmodified biofibers obtained in Examples 1, 2 and Comparative Example 1. Fig. 6 shows the measurement results. As is apparent from the results shown in Fig. 6, it was found that the composites obtained in Examples 1 and 2 each demonstrated a peak derived from the carbon-oxygen double bond (C=O) of PHEA at around 1700 cm$^{-1}$, and a peak derived from a carbon-hydrogen bond (C-H) of a benzene ring at around 3100 to 3000 cm$^{-1}$, and that poly(2-hydroxyethyl acrylate) and polystyrene were attached to the biofibers. In contrast to them, the unmodified biofibers obtained in Comparative Example 1 did not demonstrate any of these peaks.

Furthermore, the dispersibility evaluations were conducted on the composite obtained in Example 1. In both the dispersions, the composite demonstrated an excellent dispersibility and stability and scored A. Fig. 7 shows photographs of the dispersions of the composite obtained in Example 1 after they were allowed to stand for one day. In addition, Fig. 7 together shows states of 3% by mass aqueous dispersions of the unmodified biofibers of Comparative Examples 1 and 2 after they were allowed to stand for one day. The cellulose nanofibers inherently exhibit an excellent dispersibility in water as shown in Fig. 7 (Comparative Examples 1, 2). Also, the composites of the present invention in which the organic polymer was attached to the cellulose nanofibers exhibited a favorable dispersibility also in the organic solvents such as $CH_2Cl_2$ and THF.

As is apparent from the results shown in Figs. 2 to 8 , it has been found that the production method of the present invention makes it possible to uniformly cover the surfaces of biofibers with an organic polymer, without conducting a treatment for introducing a polymerizable reactive group or a reactive group for bonding with the organic polymer onto the surfaces of the biofibers, and also makes it possible to obtain stable surface-modified biofibers having an excellent dispersibility.

[Industrial Applicability]

As described above, according to the present invention, it is possible to provide surface-modified biofibers having an excellent dispersibility in a solvent, a liquid dispersion comprising the surface-modified biofibers, a resin composition comprising the surface-modified biofibers, and a method for producing surface-modified biofibers which enables the surface-modified biofibers to be easily obtained without conducting a treatment for introducing a polymerizable reactive group or a reactive group for bonding with an organic polymer onto the surfaces of biofibers.

The surface-modified biofibers of the present invention are advantageously usable, for example, as fillers for a resin material such as a rubber in place of silica which has been mainly used conventionally, and make it possible to achieve weight reduction and strength enhancement of the resin material as compared with a case using the silica.

[Reference Signs List]

1: polymerization initiator
2: first monomer
3: first polymer
4: second monomer
5: second polymer

**Claims**

1. A method for producing surface-modified biofibers, comprising:

a first polymerization step of obtaining a hydrophilic block (A) made of a first polymer and arranged on surfaces of biofibers by conducting a living radical polymerization of a first monomer in a reaction solution containing the biofibers, the first monomer, and a solvent, and allowing the first polymer thus obtained to be attached to the surfaces of the biofibers; and
a second polymerization step of obtaining a hydrophobic block (B) made of a second polymer and stacked on an outside of the hydrophilic block (A) by adding a second monomer to the reaction solution after the first polymerization step, conducting a living radical polymerization of the second monomer, and polymerizing the second polymer thus obtained onto growing ends of the first polymer, wherein
the biofibers, the first polymer, the second polymer, and the solvent have surface free energies satisfying a condition expressed by the following formula (1):

$$E_{BF} > E_A > E_B > E_S \quad \cdots (1)$$

[in the formula (1), $E_{BF}$ represents the surface free energy of the biofibers, $E_A$ represents the surface free energy of the first polymer, $E_B$ represents the surface free energy of the second polymer, and $E_S$ represents the surface free energy of the solvent].

2. The method for producing surface-modified biofibers according to claim 1, wherein the biofibers have an average diameters of 0.3 to 10,000 nm, and an aspect ratio of 10, 000 or less.

3. The method for producing surface-modified biofibers according to claim 1 or 2, wherein the biofibers are made of cellulose.

4. The method for producing surface-modified biofibers according to any one of claims 1 to 3 , which does not include a step for introducing a reactive group on the surfaces of the biofibers.

5. Surface-modified biofibers obtained by the method for producing surface-modified biofibers according to any of claims 1 to 4, the surface-modified biofibers comprising:

the biofibers;
the hydrophilic block (A) made of the first polymer and arranged on the surfaces of the biofibers; and
the hydrophobic block (B) made of the second polymer and stacked on the outside of the hydrophilic block (A), wherein
the biofibers, the first polymer, and the second polymer have surface free energies satisfying a condition expressed by the following formula (2):

$$E_{BF} > E_A > E_B \quad \cdots (2)$$

[in the formula (2), $E_{BF}$ represents the surface free energy of the biofibers, $E_A$ represents the surface free energy of the first polymer, and $E_B$ represents the surface free energy of the second polymer].

6. The surface-modified biofibers according to claim 5, wherein a total content of the first polymer and the second polymer per unit surface area of the biofibers is 0.0005 to 1.0 chains/nm$^2$.

7. The surface-modified biofibers according to claim 5 or 6, wherein a mass ratio between the first polymer and the second polymer (a mass of the first polymer:a mass of the second polymer) is 1:1 to 1:500.

8. The surface-modified biofibers according to any one of claims 5 to 7, wherein a polymer comprising the first polymer and the second polymer has a number average molecular weight of 3,000 to 1,000,000 g/mol, and a molecular weight distribution (weight average molecular weight/number average molecular weight) of 1.05 to 2.0.

9. The surface-modified biofibers according to any one of claims 5 to 8, wherein the surface-modified biofibers have an average diameter of 0.9 to 10,000 nm, and an aspect ratio of 10,000 or less.

10. A liquid dispersion comprising:

the surface-modified biofibers according to any one of claims 5 to 9; and
a solvent.

11. A resin composition comprising:

the surface-modified biofibers according to any one of claims 5 to 9; and
a resin.

Fig.1

Fig.2

Fig.3

Fig.4

## Fig.5

10.0kV 5.2mm x35.0k SE(M)

## Fig.6

COMPARATIVE EXAMPLE 1

EXAMPLE 1

EXAMPLE 2

Fig.7

| COMPARATIVE EXAMPLE 2 | COMPARATIVE EXAMPLE 1 | EXAMPLE 1 $(CH_2Cl_2)$ | EXAMPLE 1 (THF) |

Fig.8

15.0kV 4.9mm x15.0k SE(M)    3.00um

**INTERNATIONAL SEARCH REPORT**

| International application No. |
| --- |
| PCT/JP2015/056454 |

| A. CLASSIFICATION OF SUBJECT MATTER |
| --- |
| *D06M15/263*(2006.01)i |

According to International Patent Classification (IPC) or to both national classification and IPC

| B. FIELDS SEARCHED |
| --- |

Minimum documentation searched (classification system followed by classification symbols)
D06M15/263

Documentation searched other than minimum documentation to the extent that such documents are included in the fields searched

| Jitsuyo Shinan Koho | 1922–1996 | Jitsuyo Shinan Toroku Koho | 1996–2015 |
| --- | --- | --- | --- |
| Kokai Jitsuyo Shinan Koho | 1971–2015 | Toroku Jitsuyo Shinan Koho | 1994–2015 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 9-176961 A  (Shikibo Ltd.),<br>08 July 1997 (08.07.1997),<br>claims; examples<br>(Family: none) | 1-11 |
| A | JP 2009-545642 A  (Ciba Holding Inc.),<br>24 December 2009 (24.12.2009),<br>claims; examples<br>& US 2008/0033106 A1 | 1-11 |
| A | JP 2009-263417 A  (Bridgestone Corp.),<br>12 November 2009 (12.11.2009),<br>claims; drawings<br>(Family: none) | 1-11 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>27 April 2015 (27.04.15) | Date of mailing of the international search report<br>12 May 2015 (12.05.15) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**EP 3 266 929 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011184816 A
- WO 2013077354 A
- JP 2010265357 A